(19) Europäisches Patentamt
European Patent Office
Office européen des brevets

(11) **EP 4 621 107 A1**

(12) **EUROPEAN PATENT APPLICATION**
published in accordance with Art. 153(4) EPC

(43) Date of publication:
**24.09.2025  Bulletin 2025/39**

(21) Application number: **23889870.4**

(22) Date of filing: **13.10.2023**

(51) International Patent Classification (IPC):
*C25B 15/02* (2021.01)    *C25B 1/04* (2021.01)
*C25B 9/00* (2021.01)    *C25B 9/23* (2021.01)
*C25B 13/04* (2021.01)

(52) Cooperative Patent Classification (CPC):
**C25B 1/04; C25B 9/00; C25B 9/23; C25B 13/04;
C25B 15/02**

(86) International application number:
**PCT/JP2023/037256**

(87) International publication number:
**WO 2024/106099 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.11.2022  JP 2022183738
03.10.2023  JP 2023172083**

(71) Applicant: **Panasonic Intellectual Property
Management Co., Ltd.
Kadoma-shi, Osaka 571-0057 (JP)**

(72) Inventors:
• **HIKONE Yuta
  Kadoma-shi, Osaka 571-0057 (JP)**
• **NAKAUE Takayuki
  Kadoma-shi, Osaka 571-0057 (JP)**
• **ASAZAWA Koichiro
  Kadoma-shi, Osaka 571-0057 (JP)**
• **KANI Yukimune
  Kadoma-shi, Osaka 571-0057 (JP)**

(74) Representative: **Grünecker Patent- und
Rechtsanwälte
PartG mbB
Leopoldstraße 4
80802 München (DE)**

(54) **WATER ELECTROLYSIS DEVICE AND METHOD FOR OPERATING WATER ELECTROLYSIS DEVICE**

(57)    A water electrolyzer includes a water electrolysis cell, a voltage applicator, a pressure regulating valve, and a controller. The water electrolysis cell includes a diaphragm or an electrolyte membrane, an anode, and a cathode. The anode is provided in one of two spaces separated by the diaphragm, or on one of two main surfaces of the electrolyte membrane. The cathode is provided in the other space separated by the diaphragm, or on the other main surface of the electrolyte membrane. The voltage applicator applies voltage between the anode and the cathode. In start-up of the water electrolyzer, the controller controls the voltage applicator to increase current flowing through the water electrolysis cell, and then controls the pressure regulating valve to increase set pressure of the pressure regulating valve.

FIG. 1

## Description

Technical Field

The present disclosure relates to a water electrolyzer and a method of operating a water electrolyzer.

Background Art

In recent years, the spread of renewable energy has been advancing as a measure to prevent global warming. However, the outputs of photovoltaic and wind power generation, which are the major renewable energy sources, exhibit high temporal non-stationarity. Therefore, when a large amount of renewable energy is introduced, there is a possibility of excess power generation if the amount of power supplied exceeds the amount of power demand, or a power shortage if the amount of power supplied falls short of the amount of power demand. Therefore, to enable the efficient use of renewable energy, there is a need for a system for storing excess power and supplying the stored power during power shortages.

A system for storing hydrogen energy for energy storage has been considered as one such system. In a system for storing hydrogen energy, hydrogen is produced using excess power, and power is stored as hydrogen energy. In the event of a power shortage, power is generated and supplied using the stored hydrogen energy. Electrolysis of water, i.e., water electrolysis, is well-known as a method of generating hydrogen using electricity. In water electrolysis, hydrogen and oxygen are generated through electrochemical reactions.

For example, PTL 1 describes an electrolyzer including an anode compartment, a cathode compartment, a diaphragm, an anode-side circulation line, and a cathode-side circulation line. The anode compartment houses the anode and generates anode gas. The cathode compartment houses the cathode and generates hydrogen gas. The diaphragm separates the anode compartment and the cathode compartment. The anode-side circulation line discharges the electrolyte solution from the anode compartment and recirculates it back into the anode compartment. The anode-side circulation line is provided with an anode-side gas-liquid separation means. The anode-side gas-liquid separation means separates the electrolyte solution and the anode gas transported from the anode compartment. The cathode-side circulation line is provided with a cathode-side gas-liquid separation means. The cathode-side gas-liquid separation means separates the electrolyte solution and the hydrogen gas transported from the cathode compartment. In the intermediate paths of an anode-side supply line and a cathode-side supply line, a circulation tank, which is a sealed container, is provided, and the electrolyte solution separated by the anode-side gas-liquid separation means and the cathode-side gas-liquid separation means is transported to the circulation tank. The electrolyte solution transported to the circulation tank contains dissolved oxygen gas and dissolved hydrogen gas. Under the operating conditions of the electrolyzer, when the amounts of dissolved oxygen gas and dissolved hydrogen gas in the electrolyte solution exceed their saturation limits, the dissolved oxygen gas and dissolved hydrogen gas transition into gas. This gas accumulates in the gas-phase region at the top of the circulation tank. While the amount of hydrogen gas released in the gas-phase region is small, the amount of oxygen gas delivered to the gas-phase region is large. Therefore, the hydrogen gas is diluted in the gas-phase region, ensuring that the hydrogen gas concentration remains below the lower explosive limit.

Citation List

Patent Literature

PTL 1: International Publication No. 2017/030153

Summary of Invention

Technical Problem

The techniques described in the above literature do not anticipate hydrogen gas permeating the diaphragm to generate a mixture of hydrogen gas and oxygen gas in the anode compartment. Thus, the present disclosure provides a water electrolyzer that is more advantageous in terms of safety compared to conventional systems.

Solution to Problem

The present disclosure provides a water electrolyzer including:

a water electrolysis cell including a diaphragm or an electrolyte membrane, an anode provided in one of two spaces separated by the diaphragm or on one of two main surfaces of the electrolyte membrane, and a cathode provided in the other space separated by the diaphragm or on the other main surface of the electrolyte membrane;

a voltage applicator that applies voltage between the anode and the cathode;

a pressure regulating valve that regulates pressure of hydrogen-containing gas discharged from the cathode; and

a controller that, in start-up of the water electrolyzer, controls the voltage applicator to increase current flowing through the water electrolysis cell, and then controls the pressure regulating valve to increase set pressure of the pressure regulating valve. Advantageous Effects of Invention

According to the present disclosure, a water electrolyzer that is more advantageous in terms of safety compared to conventional systems can be provided.

Brief Description of Drawings

[Fig. 1] Fig. 1 is a diagram schematically illustrating a water electrolyzer according to an embodiment.

[Fig. 2] Fig. 2 is a flowchart illustrating an example of a method of operating the water electrolyzer illustrated in Fig. 1.

[Fig. 3] Fig. 3 is a diagram schematically illustrating another example of the water electrolyzer according to the embodiment.

[Fig. 4] Fig. 4 is a diagram schematically illustrating yet another example of the water electrolyzer according to the embodiment.

[Fig. 5] Fig. 5 is a graph illustrating the relationship between the pressure at the cathode and the current density and hydrogen concentration in the water electrolysis cell.

Description of Embodiments

(Underlying Knowledge Forming Basis of the Present Disclosure)

As mentioned above, in water electrolysis, hydrogen and oxygen are generated through electrochemical reactions. In a typical water electrolyzer, hydrogen gas and oxygen gas are generated in separate spaces and therefore do not mix directly. On the other hand, according to the present inventors' studies, there is a possibility that a mixture of hydrogen gas and oxygen gas may be generated when hydrogen gas permeates the electrolyte membrane or diaphragm. For example, as the pressure of hydrogen-containing gas discharged from the water electrolyzer increases, the cathode is also subjected to high pressure, and hydrogen gas is likely to permeate the electrolyte membrane or diaphragm. The techniques described in PTL 1 do not anticipate hydrogen gas generated in the cathode compartment permeating the diaphragm to mix with oxygen gas generated in the anode compartment. Therefore, the techniques described in PTL 1 cannot handle operations under conditions where the pressure of hydrogen-containing gas discharged from the water electrolyzer is high, and hydrogen gas may permeate the electrolyte membrane or diaphragm. This is because, according to operations under such conditions, hydrogen gas may permeate the electrolyte membrane or diaphragm, resulting in a mixture of hydrogen gas and oxygen gas on the anode side, and the concentration of hydrogen gas could exceed the lower explosive limit. In particular, in start-up of the water electrolyzer, the current density in the water electrolysis cell tends to be low, and the amount of oxygen gas generated at the anode is small. Therefore, in start-up of the water electrolyzer, the hydrogen concentration tends to be relatively high, and the concentration of hydrogen gas in the vicinity of the anode may exceed the lower explosive limit.

Therefore, the inventors have conducted extensive studies to address the above-mentioned issues. As a result, the inventors have newly discovered that the concentration of hydrogen gas can be kept below the lower explosive limit by adjusting the current flowing through the water electrolysis cell and the pressure of hydrogen-containing gas discharged from the cathode in start-up of the water electrolyzer. Based on this new finding, the inventors have completed the water electrolyzer of the present disclosure.

Hereinafter, an embodiment of the present disclosure will now be described with reference to the drawings. The present disclosure is not limited to the following embodiment. Note that the embodiment described hereinafter is all illustrative of comprehensive or specific examples. Thus, the numerical values, shapes, materials, components, component arrangement and connection forms, and the like discussed in the following embodiment are merely examples and are not intended to limit the present disclosure. Additionally, any components in the following embodiment that are not described in the independent claims indicating the highest-level concept are explained as optional components. Furthermore, the drawings are schematically presented to facilitate understanding, and may not accurately represent the shapes, dimensions, and proportions of the components.

(Embodiment)

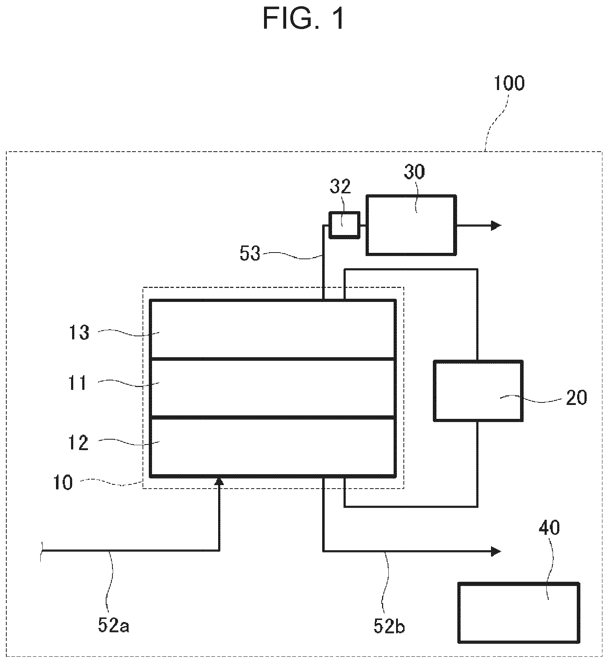

Fig. 1 is a diagram schematically illustrating a water electrolyzer according to an embodiment. As illustrated in Fig. 1, a water electrolyzer 100 includes a water electrolysis cell 10, a voltage applicator 20, a pressure regulating valve 30, and a controller 40. The water electrolysis cell 10 includes an electrolyte membrane 11, an anode 12, and a cathode 13. The anode 12 is provided on a first main surface, which is one of the two main surfaces of the electrolyte membrane 11. The cathode 13 is provided on a second main surface, which is the other main surface of the electrolyte membrane 11. The voltage applicator 20 applies voltage between the anode 12 and the cathode 13. In start-up of the water electrolyzer 100, the controller 40 controls the voltage applicator 20 to increase current flowing through the water electrolysis cell 10, and then controls the pressure regulating valve 30 to increase the set pressure of the pressure regulating valve 30.

The voltage applicator 20 is connected to the controller 40 so as to be able to receive control signals from the controller 40. The pressure regulating valve 30 is connected to the controller 40 so as to be able to receive control signals from the controller 40.

As illustrated in Fig. 1, the water electrolyzer 100 includes, for example, an anode supply path 52a, an anode discharge path 52b, and a cathode discharge path 53. The anode supply path 52a and the anode discharge path 52b are connected to the water electrolysis cell 10 on the anode 12 side. The cathode discharge path 53 is connected to the water electrolysis cell 10 on the cathode 13 side.

In operation of the water electrolyzer 100, an electrolyte solution is supplied to the water electrolysis cell 10 through the anode supply path 52a. The electrolyte solution may be water or an alkaline solution. In the water electrolysis cell 10, the application of voltage between the anode 12 and the cathode 13 results in the electrolysis of water. Therefore, oxygen gas is generated at the anode 12, and hydrogen gas is generated at the cathode 13. The oxygen gas generated at the anode 12 is discharged through the anode discharge path 52b to the outside of the water electrolysis cell 10. The hydrogen gas generated at the cathode 13 is discharged through the cathode discharge path 53 to the outside of the water electrolysis cell 10. The electrolyte solution supplied to the water electrolysis cell 10 is discharged through the anode discharge path 52b to the outside of the water electrolysis cell 10. In the anode discharge path 52b, for example, a gas-liquid separator (not illustrated) is disposed, where the electrolyte solution and the oxygen gas are separated.

The water electrolyzer 100 is, for example, a water electrolyzer employing a single-side water supply method. Therefore, the water electrolyzer 100 is not equipped with a supply path for supplying an electrolyte solution to the water electrolysis cell 10 on the cathode 13 side. According to such a configuration, the water electrolyzer 100 has a simple structure, and the manufacturing cost and running cost of the water electrolyzer 100 tend to be lower. In contrast, the water electrolyzer 100 may be provided with a supply path for supplying an electrolyte solution to the water electrolysis cell 10 on the cathode 13 side, and may be configured as a water electrolyzer employing a double-side water supply method.

The electrolyte membrane 11 is not limited to a specific membrane as long as it has ionic conductivity. The electrolyte membrane 11 may be an anion exchange membrane (AEM) or a proton exchange membrane (PEM). In other words, the water electrolyzer 100 may be an AEM-type water electrolyzer or a PEM-type water electrolyzer.

The voltage applicator 20 may apply a direct current (DC) voltage between the anode 12 and the cathode 13, for example. The power supply connected to the voltage applicator 20 is not limited to a specific type of power supply. The voltage applicator 20 may be connected to a DC power supply. In this case, the voltage applicator 20 is equipped with, for example, a DC/DC converter. The voltage applicator 20 may be connected to an alternating current (AC) power supply. In this case, the voltage applicator 20 is equipped with, for example, an AC/DC converter.

As illustrated in Fig. 1, the pressure regulating valve 30 is disposed, for example, in the cathode discharge path 53. The pressure of hydrogen-containing gas discharged from the cathode 13 is regulated by the pressure regulating valve 30. The pressure regulating valve 30 is not limited to a specific valve. The pressure regulating valve 30 is, for example, a known back pressure valve. The pressure of the hydrogen-containing gas discharged from the cathode 13 is the pressure of the hydrogen-containing gas in the space in contact with the cathode electrode at the cathode 13.

The controller 40 is not limited to a specific configuration as long as it is capable of controlling the voltage applicator 20 and the pressure regulating valve 30. The controller 40 includes, for example, an arithmetic circuit and a memory circuit. The memory circuit stores a program for controlling the voltage applicator 20 and the pressure regulating valve 30, which can be executed by the arithmetic circuit.

An example of the operation of the water electrolyzer 100 will be described. The following operation can be performed, for example, by executing the program read from the memory circuit of the controller 40 in the arithmetic circuit. It is not mandatory that the following operation be performed by the controller 40 alone, and the operation may be partially performed by an operator. The operation of the water electrolyzer 100 will be described, taking as an example the case where the electrolyte membrane 11 is an anion exchange membrane and the electrolyte solution is an aqueous potassium hydroxide solution.

The aqueous potassium hydroxide solution is supplied through the anode supply path 52a to the anode 12 of the water electrolysis cell 10, and a voltage is applied between the anode 12 and the cathode 13 by the voltage applicator 20. As a result, as indicated in Equation (1) below, the oxidation reaction of hydroxide ions proceeds at the anode 12, generating oxygen and electrons. The oxygen is discharged together with the aqueous potassium hydroxide solution through the anode discharge path 52b to the outside of the water electrolysis cell 10. The electrons are transferred to the cathode 13 by the voltage applicator 20. As indicated in Equation (2) below, the reduction reaction of water proceeds at the cathode 13, generating hydrogen and hydroxide ions. Electrical neutrality is maintained as the hydroxide ions are conducted through the electrolyte membrane 11. In this way, the application of a voltage between the anode 12 and the cathode 13 results in electrochemical reactions represented by Equations (1) and (2), generating oxygen at the anode 12 and hydrogen at the cathode 13.

$$\text{Anode: } 4OH^- \rightarrow O_2 + 2H_2O + 4e^- \qquad (1)$$

$$\text{Cathode: } 4H_2O + 4e^- \rightarrow 2H_2 + 4OH^- \qquad (2)$$

The hydrogen generated at the cathode 13 by the electrochemical reaction is discharged through the cathode discharge path 53 to the outside of the water electrolysis cell 10. The pressure of hydrogen-containing gas discharged from the cathode 13 is regulated by the pressure regulating valve 30. This allows, for example, the pressure of the hydrogen-containing gas discharged from the cathode 13 to be increased above atmospheric pressure. The controller 40 may, for example, control the pressure regulating valve 30 to regulate the pressure of the hydrogen-containing gas discharged from the cathode 13 to 3 MPaG or higher. As a result, high-pressure hydrogen-containing gas can be supplied to the outside of the water electrolysis cell 10.

The upper limit of the pressure of the hydrogen-containing gas discharged from the cathode 13 is not limited to a specific value. The pressure of the hydrogen-containing gas discharged from the cathode 13 is, for example, 20 MPaG or lower. In this case, the pressure resistance required for the water electrolysis cell 10 does not significantly increase the manufacturing cost of the water electrolyzer 100.

When the pressure of the hydrogen-containing gas discharged from the cathode 13 increases with the control of the pressure regulating valve 30, the amount of hydrogen that permeates the electrolyte membrane 11 from the cathode 13 toward the anode 12 increases, and the concentration of hydrogen gas in the vicinity of the anode 12 tends to be high. In particular, when the current density in the water electrolysis cell is low, the amount of oxygen generated at the anode 12 is small. On the other hand, the amount of hydrogen that permeates the electrolyte membrane 11 from the cathode 13 toward the anode 12 is proportional to the pressure difference between the cathode 13 and the anode 12. In start-up of the water electrolyzer 100, controlling the pressure regulating valve 30 to increase the pressure at the cathode 13 before or simultaneously with the flow of current through the water electrolysis cell initiates the above-mentioned electrochemical reactions from a state where the current density in the water electrolysis cell is zero. This may result in an extremely high concentration of hydrogen gas in the vicinity of the anode 12. In start-up of the water electrolyzer 100, the controller 40 controls the voltage applicator 20 to increase current flowing through the water electrolysis cell 10, and then controls the pressure regulating valve 30 to increase the set pressure of the pressure regulating valve 30. This keeps the pressure of the hydrogen-containing gas discharged from the cathode 13 low in a state where the current density in the water electrolysis cell is low. Therefore, compared to the case where the pressure regulating valve 30 is controlled to increase the set pressure of the pressure regulating valve 30 before or simultaneously with the flow of current through the water electrolysis cell 10, the possibility that the concentration of hydrogen gas at the anode 12 exceeds the lower explosive limit is reduced. On the other hand, when the current flowing through the water electrolysis cell 10 increases under control of the voltage applicator 20, the amount of oxygen generated at the anode 12 increases. Therefore, even if the pressure of the hydrogen-containing gas discharged from the cathode 13 is increased thereafter, an increase in the amount of hydrogen that permeates the electrolyte membrane 11 from the cathode 13 toward the anode 12 reduces the possibility that the concentration of hydrogen gas at the anode 12 exceeds the lower explosive limit.

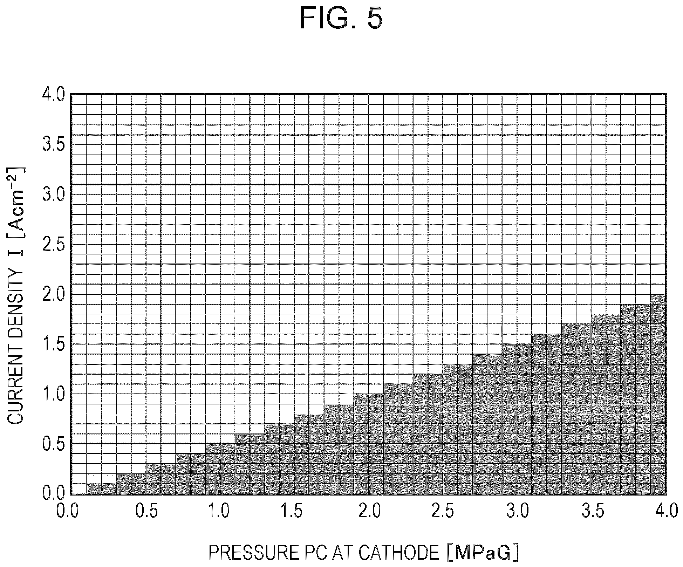

The controller 30, for example, increases the set pressure of the pressure regulating valve 30 to be less than or equal to the upper limit of the set pressure of the pressure regulating valve 30, which is set relative to the current value of the water electrolysis cell 10. As a result, an increase in the amount of hydrogen that permeates the electrolyte membrane 11 from the cathode 13 toward the anode 12 reduces the possibility that the concentration of hydrogen gas at the anode 12 exceeds the lower explosive limit. The upper limit of the set pressure of the pressure regulating valve 30 is determined so that, for example, the concentration of hydrogen gas at the anode 12 does not exceed the lower explosive limit when the current value of the water electrolysis cell 10 is a predetermined value. The upper limit of the set pressure is appropriately set as, for example, the set pressure of the pressure regulating valve 30, which achieves the upper limit pressure that is less than or equal to the cathode pressure at the boundary between the region indicated in white and the region indicated in gray at the predetermined current density indicated in Fig. 5. Note that the upper limit of the set pressure of the pressure regulating valve 30 may be directly associated with the current value of the water electrolysis cell 10, or the upper limit of the set pressure of the pressure regulating valve 30 may be directly associated with a parameter that indirectly indicates the current value of the water electrolysis cell 10. An example of such a parameter is a voltage value applied to the water electrolysis cell 10.

When, for example, the current value of the water electrolysis cell 10 reaches a target current value during the water electrolysis operation of the water electrolyzer 100, the controller 30 may control the pressure regulating valve 30 to increase the set pressure of the pressure regulating valve 30. As a result, an increase in the amount of hydrogen that permeates the electrolyte membrane 11 from the cathode 13 toward the anode 12 reduces the possibility that the concentration of hydrogen gas at the anode 12 exceeds the lower explosive limit.

When, for example, the current value of the water electrolysis cell 10 reaches a predetermined current value that is less than the target current value during the water electrolysis operation of the water electrolyzer 100, the controller 30 may control the pressure regulating valve 30 to increase the set pressure of the pressure regulating valve 30. As a result, an increase in the amount of hydrogen that permeates the electrolyte membrane 11 from the cathode 13 toward the anode 12 reduces the possibility that the concentration of hydrogen gas at the anode 12 exceeds the lower explosive limit.

A first set pressure, which is the set pressure before increasing the set pressure of the pressure regulating valve 30, is, for example, less than a second set pressure, which is the set pressure of the pressure regulating valve when the current value of the water electrolysis cell 10 is the target current value during the water electrolysis operation of the water electrolyzer 100. This can reduce the possibility of the hydrogen gas concentration in the vicinity of the anode 12 becoming excessively high.

The first set pressure, which is the set pressure before increasing the set pressure of the pressure regulating valve 30, may be, for example, atmospheric pressure. This can further reduce the possibility of the hydrogen gas concentration in the vicinity of the anode 12 becoming excessively high.

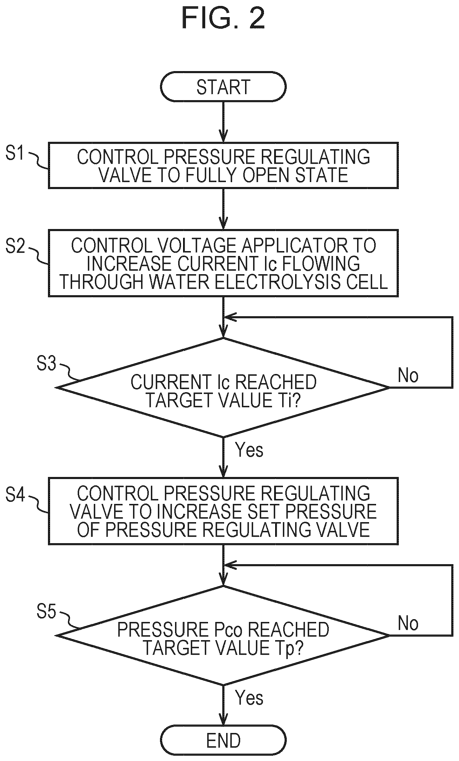

Fig. 2 is a flowchart illustrating an example of a method of operating the water electrolyzer 100. The water electrolyzer 100 is operated according to, for example, a method including (I) and (II) below:

(I) a voltage is applied between the anode 12 and the cathode 13, which are disposed on either side of the electrolyte membrane 11, to induce a water electrolysis reaction by the water electrolysis cell 10; and
(II) in start-up of the water electrolyzer 100, current flowing through the water electrolysis cell 10 is increased, and then the pressure regulating valve 30 is controlled to increase the set pressure of the pressure regulating valve 30.

In response to an instruction to activate the water electrolyzer 100, in step S1, the controller 40 controls the pressure regulating valve 30 so that the pressure regulating valve 30 is in a fully open state. For example, the pressure regulating valve 30 is controlled so that the pressure (the set pressure of the pressure regulating valve 30) applied to the valve body by the drive portion of the pressure regulating valve 30 becomes minimum. For example, the pressure regulating valve 30 may be controlled so that the set pressure of the pressure regulating valve 30 is atmospheric pressure (0 PaG). At this time, if the pressure regulating valve 30 is a back pressure valve, the pressure regulating valve 30 is controlled so that the pressure applied to the diaphragm is 0 PaG. The controller 40 may, for example, obtain a pressure detection signal from a sensor 32 for detecting the pressure on the primary side of the pressure regulating valve 30, and determine whether the pressure regulating valve 30 is in a fully open state based on the pressure detection signal. If this determination is affirmative, the process of step S1 may be skipped; if this determination is negative, the process of step S1 may be performed. The pressure regulating valve 30 may be controlled so that the pressure regulating valve 30 is in a fully open state when the water electrolyzer 100 is stopped. In this case, step S1 may be omitted, or a determination as to whether the pressure regulating valve 30 is in a fully open state may be omitted.

Next, the process proceeds to step S2, where the controller 40 controls the voltage applicator 20 to increase current flowing through the water electrolysis cell 10. In this case, for example, the voltage applicator 20 is controlled so that a voltage associated with a target value Ti of current flowing through the water electrolysis cell 10 is applied between the anode 12 and the cathode 13. Next, the process proceeds to step S3, where the controller 40 obtains a detection signal of a current Ic flowing through the water electrolysis cell 10 from the voltage applicator 20, and determines whether the current Ic has reached the target value Ti. The target value Ti is set, for example, based on a target value Tp of the pressure of the hydrogen-containing gas discharged from the cathode 13 of the water electrolyzer 100, and the cross-leakage amount of hydrogen gas through the electrolyte membrane 11 at the pressure corresponding to the target value Tp. For example, consider a case where the water electrolyzer 100 is operated under the conditions that the current flowing through the water electrolysis cell 10 corresponds to the target value Ti, and the pressure of the hydrogen-containing gas discharged from the cathode 13 corresponds to the target value Tp. In this case, the target value Ti is set so that the concentration of hydrogen gas at the anode 12 is below the lower explosive limit. The determination in step S3 is repeated at predetermined intervals until the determination becomes affirmative. The pressure regulating valve 30 is kept fully open in steps S2 and S3. Therefore, the pressure at the cathode 13 is maintained at atmospheric pressure (0 PaG) as the current Ic increases in steps S2 and S3.

If the determination in step S3 is affirmative, the process proceeds to step S4, where the controller 40 controls the pressure regulating valve 30 to increase the set pressure of the pressure regulating valve 30. This increases the pressure of the hydrogen-containing gas discharged from the cathode 13. In this case, for example, when the pressure regulating valve 30 is a back pressure valve, the controller 40 controls the back pressure valve to increase the pressure applied to the diaphragm.

Next, the process proceeds to step S5, where the controller 40 obtains, for example, a pressure detection signal from the sensor 32 for detecting a pressure Pco of the hydrogen-containing gas discharged from the cathode 13, and determines whether the pressure Pco has reached the target value Tp. The determination in step S5 is repeated at predetermined intervals until the determination becomes affirmative. If the determination of step S5 is affirmative, the sequence of processes ends, and activation of the water electrolyzer 100 is completed. The water electrolyzer 100 is then operated according to the target value Ti of the current flowing through the water electrolysis cell 10 and the target value Tp of the pressure of the hydrogen-containing gas discharged from the cathode 13.

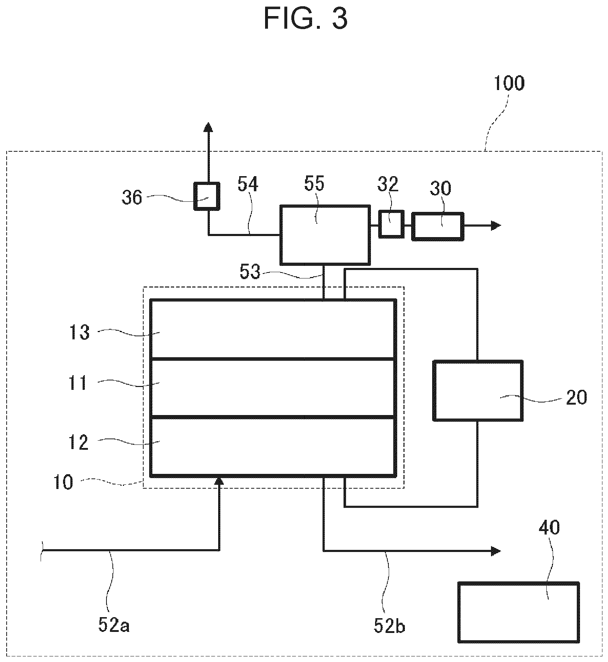

As illustrated in Fig. 3, the water electrolyzer 100 may be configured so that the cathode 13 is connected to a tank 55. Fig. 3 is a diagram schematically illustrating another example of the water electrolyzer according to the embodiment. In this case, the cathode 13 is connected to the inlet of the tank 55, and the pressure regulating valve 30 is disposed on the outlet side of the tank 55. In other words, the tank 55 is disposed between the cathode 13 and the pressure regulating valve 30. As illustrated in Fig. 3, a communicating path 54 capable of communicating with the atmosphere is connected to the tank 55, and an opening/closing valve 36 is disposed in the communicating path 54. In the case where the pressure regulating valve 30 is in a fully open state in start-up of the water electrolyzer 100, the opening/closing valve 36 is controlled to open. This maintains the pressure of the hydrogen-containing gas discharged from the cathode 13 at atmospheric pressure (0 GPaG). In addition, in step S4, the opening/closing valve 36 is controlled to close when controlling the pressure regulating valve 30 to increase the pressure of the hydrogen-containing gas discharged from the cathode 13.

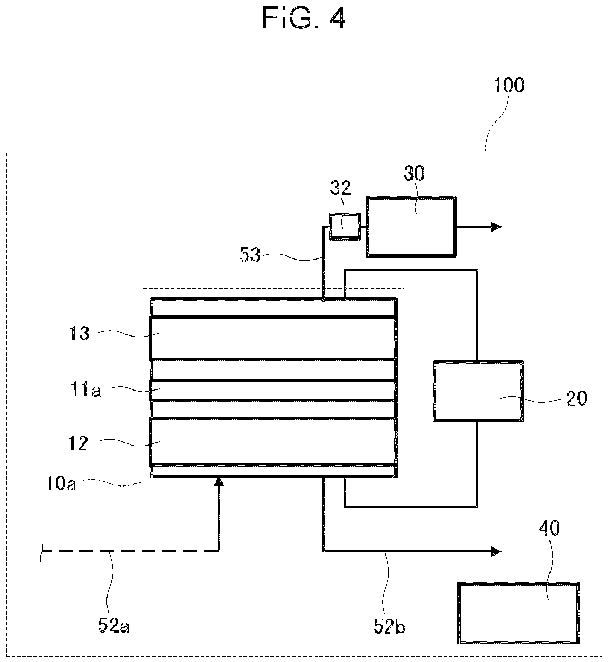

As illustrated in Fig. 4, in the water electrolyzer 100, the water electrolysis cell 10 may be modified like a water electrolysis cell 10a. Fig. 4 is a diagram schematically illustrating yet another example of the water electrolyzer according to the embodiment. The water electrolysis cell 10a is configured like the water electrolysis cell 10 except for the portions specifically described. The components of the water electrolysis cell 10a that are the same as or corresponding to the components of the water electrolysis cell 10 are given the same reference numerals, and detailed descriptions thereof are omitted. The above description of the water electrolysis cell 10 likewise applies to the water electrolysis cell 10a, provided there is no technical contradiction.

As illustrated in Fig. 4, the water electrolysis cell 10a includes a diaphragm 11a, the anode 12, and the cathode 13. The anode 12 is provided in a first space, which is one of the two spaces separated by the diaphragm 11a. The cathode 13 is provided in a second space, which is the other space separated by the diaphragm 11a. In the water electrolysis cell 10a, when the pressure of the hydrogen-containing gas discharged from the cathode 13 increases with the control of the pressure regulating valve 30, the amount of hydrogen that permeates the diaphragm 11a from the cathode 13 toward the anode 12 increases, and the concentration of hydrogen gas in the vicinity of the anode 12 tends to be high. Therefore, in start-up of the water electrolyzer 100, the controller 40 controls the voltage applicator 20 and the pressure regulating valve 30 as mentioned above, thereby reducing the possibility that the concentration of hydrogen gas at the anode 12 exceeds the lower explosive limit.

The diaphragm 11a is, for example, a diaphragm for alkaline water electrolysis. The diaphragm 11a is, for example, a sheet-like porous membrane. The diaphragm 11a has a thickness of, for example, 100 $\mu$m to 500 $\mu$m, and has pores that serve as pathways for ions or the electrolyte solution. The materials of the diaphragm 11a are not limited to specific materials. Examples of the materials of the diaphragm 11a include asbestos, polymer-reinforced asbestos, potassium titanate bonded with polytetrafluoroethylene (PTFE), zirconia bonded with PTFE, and antimony acid and antimony oxide bonded with polysulfone. Other examples of the materials of the diaphragm 11a include sintered nickel, ceramics, nickel coated with nickel oxide, and polysulfone. The diaphragm 11a may be a Zirfon Perl UTP 500 manufactured by AGFA.

(Supplementary)

From the above description, the following techniques are disclosed.

(Technique 1)

A water electrolyzer including:

a water electrolysis cell including a diaphragm or an electrolyte membrane, an anode provided in one of two spaces separated by the diaphragm or on one of two main surfaces of the electrolyte membrane, and a cathode provided in the other space separated by the diaphragm or on the other main surface of the electrolyte membrane;

a voltage applicator that applies voltage between the anode and the cathode;

a pressure regulating valve that regulates pressure of hydrogen-containing gas discharged from the cathode; and

a controller that, in start-up of the water electrolyzer, controls the voltage applicator to increase current flowing through the water electrolysis cell, and then controls the pressure regulating valve to increase set pressure of the pressure regulating valve.

(Technique 2)

The water electrolyzer according to technique 1, wherein:
the controller controls the pressure regulating valve to regulate the pressure of the hydrogen-containing gas discharged from the cathode to 3 MPaG or more.

(Technique 3)

The water electrolyzer according to technique 1 or 2, wherein:
the controller increases the set pressure of the pressure regulating valve to be less than or equal to an upper limit of the set pressure of the pressure regulating valve, the upper limit of the set pressure being set relative to a value of the current flowing through the water electrolysis cell.

(Technique 4)

The water electrolyzer according to any one of techniques 1 to 3, wherein:
the controller controls the pressure regulating valve to increase the set pressure of the pressure regulating valve when a value of the current flowing through the water electrolysis cell reaches a target current value during water electrolysis operation of the water electrolyzer.

(Technique 5)

The water electrolyzer according to any one of techniques 1 to 3, wherein:
the controller controls the pressure regulating valve to increase the set pressure of the pressure regulating valve when a value of the current flowing through the water electrolysis cell reaches a predetermined current value that is less than a target current value during water electrolysis operation of the water electrolyzer.

(Technique 6)

The water electrolyzer according to any one of techniques 1 to 5, wherein:
a first set pressure that is the set pressure before increasing the set pressure of the pressure regulating valve is less than a second set pressure that is the set pressure of the pressure regulating valve when a value of the current flowing through the water electrolysis cell is a target current value during water electrolysis operation of the water electrolyzer.

(Technique 7)

The water electrolyzer according to technique 6, wherein:
the first set pressure is 0 PaG.

(Technique 8)

The water electrolyzer according to any one of techniques 1 to 7, wherein:
the electrolyte membrane is an anion exchange membrane.

(Technique 9)

The water electrolyzer according to any one of techniques 1 to 7, wherein:
the electrolyte membrane is a proton exchange membrane.

(Technique 10)

A method of operating a water electrolyzer including: a water electrolysis cell including an anode and a cathode provided with a diaphragm or an electrolyte membrane disposed between the anode and the cathode; and a pressure regulating valve that regulates pressure of hydrogen-containing gas discharged from the cathode, the method including:

applying voltage between the anode and the cathode to induce a water electrolysis reaction by the water electrolysis cell; and

in start-up of the water electrolyzer, increasing current flowing through the water electrolysis cell, and then controlling the pressure regulating valve to increase set pressure of the pressure regulating valve.

Example

In the water electrolyzer 100, by measuring the physical properties of the electrolyte membrane 11, the relationship between the pressure at the cathode 13 and the current density and hydrogen concentration in the water electrolysis cell 10 can be clarified. The relationship between the pressure at the cathode and the current density and hydrogen concentration in the water electrolysis cell, when using the electrolyte membrane QPAF-4 manufactured by Takahata Precision Co., Ltd., was investigated as follows. The thickness of the electrolyte membrane QPAF-4 was 30 $\mu$m.

Fig. 5 is a graph illustrating the relationship between the pressure at the cathode 13 and the current density and hydrogen concentration in the water electrolysis cell 10 when the water electrolyzer 100 was manufactured using the electrolyte membrane QPAF-4 as the electrolyte membrane 11. In this graph, the region indicated in gray represents the conditions where the hydrogen concentration is greater than or equal to a predetermined reference value, while the other region represents the conditions where the hydrogen concentration is less than the predetermined reference value. The method of creating the graph in Fig. 5 is described below. Note that the graph in Fig. 5 can vary depending on the physical properties of the electrolyte membrane and the experimental conditions, but the method of creating this graph is applicable to other electrolyte membranes and other experimental conditions as well. Note that the relationship between the pressure at the cathode and the current density and hydrogen concentration in the water electrolysis cell in the present disclosure is not limited to the relationship illustrated in Fig. 5.

The hydrogen gas permeability coefficient of the electrolyte membrane QPAF-4 at 60°C was measured in accordance with the differential pressure method specified in Japanese Industrial Standard (JIS) K7126-1.

When a water electrolysis cell is made using the electrolyte membrane QPAF-4, the amount of hydrogen gas nH [mol/(cm$^2 \times$s)] that permeates the electrolyte membrane from the cathode to the anode per unit time and per unit area is represented by Equation (3) below. In Equation (3), kH is the hydrogen gas permeability coefficient [mol$\times$cm/(cm$^2 \times$s$\times$Pa)] of the electrolyte membrane, $\Delta$P is the differential pressure [Pa] between the anode and the cathode, and L is the thickness [cm] of the electrolyte membrane. $\Delta$P is represented by Equation (4) below. In Equation (4), PC is the pressure [Pa] at the cathode, and PA is the pressure [Pa] at the anode. Note that, when pressurization is assumed only on the cathode side, PA is atmospheric pressure (standard atmospheric pressure).

$$nH = kH \times \Delta P/L \quad (3)$$

$$\Delta P = PC\text{-}PA \quad (4)$$

The amount of oxygen nO [mol/(cm$^2 \times$s)] generated per unit time and per unit area at the anode of this water electrolysis cell is represented by Equation (5) below. In Equation (5), I is the current density [C/(cm$^2 \times$s)] in the water electrolysis cell. The current density I is determined according to the electrode area. F is the Faraday constant [C/mol].

$$nO = I/(4 \times F) \quad (5)$$

According to Equation (3) and Equation (5), the hydrogen concentration cH [vol%] at the anode is represented by Equation (6) below:

$$cH = nH/(nH + nO) \times 100 \quad (6)$$

The hydrogen explosion risk reference concentration clim [vol%], which accounts for the safety factor relative to the hydrogen lower explosive limit concentration, was defined as represented in Equation (7) below. In Equation (7), LEL is the hydrogen lower explosive limit concentration [vol%], and sf is the safety factor [-]. In the graph indicated in Fig. 5, the safety factor sf is 5, and the concentration at 20% of the hydrogen lower explosive limit concentration LEL is set as the hydrogen explosion risk reference concentration clim:

$$clim = LEL/sf \quad (7)$$

The hydrogen concentration cH at the anode, determined by Equation (6), was compared with the hydrogen explosion risk reference concentration clim, determined by Equation (7), to assess the potential risk of hydrogen explosion. If the condition "hydrogen concentration cH < hydrogen explosion risk reference concentration clim" is met, it can be concluded that there is no risk of hydrogen explosion and the situation is considered safe. If the condition "hydrogen concentration cH $\geq$ hydrogen explosion risk reference concentration clim" is met, it can be concluded that there is a risk of hydrogen explosion and the situation is considered dangerous. Based on the predetermined values of the pressure PC at the cathode and the current density I, these calculations and comparisons were performed, and a graph illustrating the presence or absence of hydrogen explosion risk, color-coded, was obtained as indicated in Fig. 5.

By operating the water electrolyzer under the conditions determined that there is no hydrogen explosion risk in the graph in Fig. 5, the risk of hydrogen explosion can be avoided. For example, if the target value of the pressure of hydrogen-containing gas discharged from the cathode is 3 MPaG, in start-up of the water electrolyzer, the current density in the water electrolysis cell is increased from 0 to 1.6 Acm$^{-2}$ or more. During this period, the pressure regulating valve is kept fully open. After the current density reaches 1.6 Acm$^{-2}$ or more, it can be seen that, by controlling the pressure regulating valve to adjust the pressure of the hydrogen-containing gas discharged from the cathode to approach the target value, the water electrolyzer can be activated under the conditions where there is no hydrogen explosion risk. If the water electrolyzer is activated so as not to be under the conditions in the region indicated in gray in Fig. 5, the voltage applicator and the pressure regulating valve may be controlled so that the current density and the pressure of the hydrogen-containing gas increase gradually.

Industrial Applicability

The water electrolyzer of the present disclosure can be activated with a reduced risk of hydrogen explosion.

Reference Signs List

> 10, 10a water electrolysis cell
> 12 anode
> 13 cathode
> 20 voltage applicator
> 30 pressure regulating valve
> 40 controller
> 100 water electrolyzer

## Claims

1. A water electrolyzer comprising:

   a water electrolysis cell including a diaphragm or an electrolyte membrane, an anode provided in one of two spaces separated by the diaphragm or on one of two main surfaces of the electrolyte membrane, and a cathode provided in the other space separated by the diaphragm or on the other main surface of the electrolyte membrane; a voltage applicator that applies voltage between the anode and the cathode; a pressure regulating valve that regulates pressure of hydrogen-containing gas discharged from the cathode; and a controller that, in start-up of the water electrolyzer, controls the voltage applicator to increase current flowing through the water electrolysis cell, and then controls the pressure regulating valve to increase set pressure of the pressure regulating valve.

2. The water electrolyzer according to claim 1, wherein the controller controls the pressure regulating valve to regulate the pressure of the hydrogen-containing gas discharged from the cathode to 3 MPaG or more.

3. The water electrolyzer according to claim 1 or 2, wherein the controller increases the set pressure of the pressure regulating valve to be less than or equal to an upper limit of the set pressure of the pressure regulating valve, the upper limit of the set pressure being set relative to a value of the current flowing through the water electrolysis cell.

4. The water electrolyzer according to any one of claims 1 to 3, wherein the controller controls the pressure regulating valve to increase the set pressure of the pressure regulating valve when a value of the current flowing through the water electrolysis cell reaches a target current value during water electrolysis operation of the water electrolyzer.

5. The water electrolyzer according to any one of claims 1 to 3, wherein
the controller controls the pressure regulating valve to increase the set pressure of the pressure regulating valve when a value of the current flowing through the water electrolysis cell reaches a predetermined current value that is less than a target current value during water electrolysis operation of the water electrolyzer.

6. The water electrolyzer according to any one of claims 1 to 5, wherein
a first set pressure that is the set pressure before increasing the set pressure of the pressure regulating valve is less than a second set pressure that is the set pressure of the pressure regulating valve when a value of the current flowing through the water electrolysis cell is a target current value during water electrolysis operation of the water electrolyzer.

7. The water electrolyzer according to claim 6, wherein
the first set pressure is 0 PaG.

8. The water electrolyzer according to any one of claims 1 to 7, wherein
the electrolyte membrane is an anion exchange membrane.

9. The water electrolyzer according to any one of claims 1 to 7, wherein
the electrolyte membrane is a proton exchange membrane.

10. A method of operating a water electrolyzer including: a water electrolysis cell including an anode and a cathode provided with a diaphragm or an electrolyte membrane disposed between the anode and the cathode; and a pressure regulating valve that regulates pressure of hydrogen-containing gas discharged from the cathode, the method comprising:

applying voltage between the anode and the cathode to induce a water electrolysis reaction by the water electrolysis cell; and
in start-up of the water electrolyzer, increasing current flowing through the water electrolysis cell, and then controlling the pressure regulating valve to increase set pressure of the pressure regulating valve.

FIG. 1

# FIG. 2

```
┌─────────────┐
│    START    │
└─────────────┘
       │
       ▼
S1 ┌──────────────────────────────┐
   │ CONTROL PRESSURE REGULATING  │
   │  VALVE TO FULLY OPEN STATE   │
   └──────────────────────────────┘
       │
       ▼
S2 ┌──────────────────────────────┐
   │ CONTROL VOLTAGE APPLICATOR TO │
   │  INCREASE CURRENT Ic FLOWING  │
   │ THROUGH WATER ELECTROLYSIS CELL│
   └──────────────────────────────┘
       │
       ▼
S3      ◇ CURRENT Ic REACHED      No
        ◇ TARGET VALUE Ti?  ────────┐
           │ Yes
       ▼
S4 ┌──────────────────────────────┐
   │ CONTROL PRESSURE REGULATING  │
   │ VALVE TO INCREASE SET PRESSURE│
   │ OF PRESSURE REGULATING VALVE │
   └──────────────────────────────┘
       │
       ▼
S5      ◇ PRESSURE Pco REACHED    No
        ◇ TARGET VALUE Tp?  ────────┐
           │ Yes
       ▼
┌─────────────┐
│     END     │
└─────────────┘
```

FIG. 3

FIG. 4

# FIG. 5

# EP 4 621 107 A1

<table>
<tr><td colspan="2"><strong>INTERNATIONAL SEARCH REPORT</strong></td><td>International application No.<br><br><strong>PCT/JP2023/037256</strong></td></tr>
</table>

**A.    CLASSIFICATION OF SUBJECT MATTER**

*C25B 15/02*(2021.01)i; *C25B 1/04*(2021.01)i; *C25B 9/00*(2021.01)i; *C25B 9/23*(2021.01)i; *C25B 13/04*(2021.01)i
FI:    C25B15/02; C25B13/04 301; C25B9/00 A; C25B1/04; C25B9/23

According to International Patent Classification (IPC) or to both national classification and IPC

**B.    FIELDS SEARCHED**

Minimum documentation searched (classification system followed by classification symbols)

C25B15/02; C25B1/04; C25B9/00; C25B9/23; C25B13/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2014-062311 A (HONDA MOTOR CO., LTD.) 10 April 2014 (2014-04-10)<br>    paragraphs [0021]-[0054], fig. 1-4 | 1-10 |
| Y | JP 2012-167331 A (HONDA MOTOR CO., LTD.) 06 September 2012 (2012-09-06)<br>    paragraphs [0019]-[0055], fig. 1-6 | 1-10 |
| Y | JP 7158529 B1 (HONDA MOTOR CO., LTD.) 21 October 2022 (2022-10-21)<br>    paragraph [0028], fig. 2 | 8 |
| A | JP 2021-181605 A (KABUSHIKI KAISHA TOYOTA CHUO KENKYUSHO) 25 November 2021 (2021-11-25)<br>    paragraphs [0007], [0021]-[0056], [0062]-[0068], fig. 1-9, 13, 14 | 1-10 |
| A | JP 2012-111981 A (TAKASAGO THERMAL ENGINEERING CO., LTD.) 14 June 2012 (2012-06-14)<br>    entire text, all drawings | 1-10 |

☐ Further documents are listed in the continuation of Box C.          ☑ See patent family annex.

| * Special categories of cited documents: | |
|---|---|
| "A"    document defining the general state of the art which is not considered to be of particular relevance | "T"    later document published after the international filing date or priority date and not in conflict with the application but cited to understand the principle or theory underlying the invention |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **06 December 2023** | **19 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/037256**

| Patent document cited in search report | | | Publication date (day/month/year) | Patent family member(s) | Publication date (day/month/year) |
|---|---|---|---|---|---|
| JP | 2014-062311 | A | 10 April 2014 | (Family: none) | |
| JP | 2012-167331 | A | 06 September 2012 | US 2012/0209434 A1 paragraphs [0021]-[0064], fig. 1-6 | |
| JP | 7158529 | B1 | 21 October 2022 | US 2022/0356586 A1 paragraph [0045], fig. 2 JP 2022-172655 A CN 115386904 A | |
| JP | 2021-181605 | A | 25 November 2021 | (Family: none) | |
| JP | 2012-111981 | A | 14 June 2012 | (Family: none) | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017030153 A